# EUROPÄISCHE PATENTSCHRIFT

(11) **EP 2 632 695 B1**
(45) Veröffentlichungstag und Bekanntmachung des Hinweises auf die Patenterteilung: **24.12.2014**
(21) Anmeldenummer: 11766999.4
(22) Anmeldetag: 07.10.2011
(51) Int. Cl.: B29C 65/08, B29C 65/74, B65B 51/22, B65B 51/30

(54) **SIEGELBACKE ZUR SIEGELUNG EINES PACKSTOFFS MITTELS ULTRASCHALL**
SEALING JAW FOR SEALING A PACKAGING MATERIAL USING ULTRASOUND
MACHOIRE DE SCELLAGE POUR SCELLER UN MATERIAU D'EMBALLAGE A L'AIDE DES ULTRASONS

(30) Priorität: 29.10.2010 DE 102010043089
(43) Veröffentlichungstag der Anmeldung: 04.09.2013
(73) Patentinhaber: Robert Bosch GmbH, 70442 Stuttgart (DE)
(72) Erfinder: IPPERS, Juergen, 47929 Grefrath (DE); WIEDUWILT, Ulrich, 73529 Schwäbisch Gmünd (DE)
(86) Internationale Anmeldenummer: PCT/EP2011/067541
(87) Internationale Veröffentlichungsnummer: WO 2012/055689

(56) Entgegenhaltungen:
- EP-A2- 0 242 480
- EP-A2- 1 066 951
- EP-A2- 1 232 850
- WO-A1-2008/037505
- DE-A1-102009 002 295
- DE-A1-102009 002 296
- DE-A1-102009 002 298
- DE-U1-202009 007 996
- JP-A- 7 010 130
- US-A1- 2004 011 452

## Beschreibung

### Stand der Technik

Die Erfindung geht aus von einer Siegelbacke zur Siegelung eines Packstoffs mittels Ultraschall nach der Gattung des unabhängigen Anspruchs. Eine solche gattungsgemäße Vorrichtung ist beispielsweise bekannt aus der US 2004/0011452 A1. Dort ist eine auf Ultraschall basierende Quersiegeleinrichtung für Riegelverpackungen beschrieben, die aus einer rotierenden Sonotrode und einem rotierenden Amboss besteht.

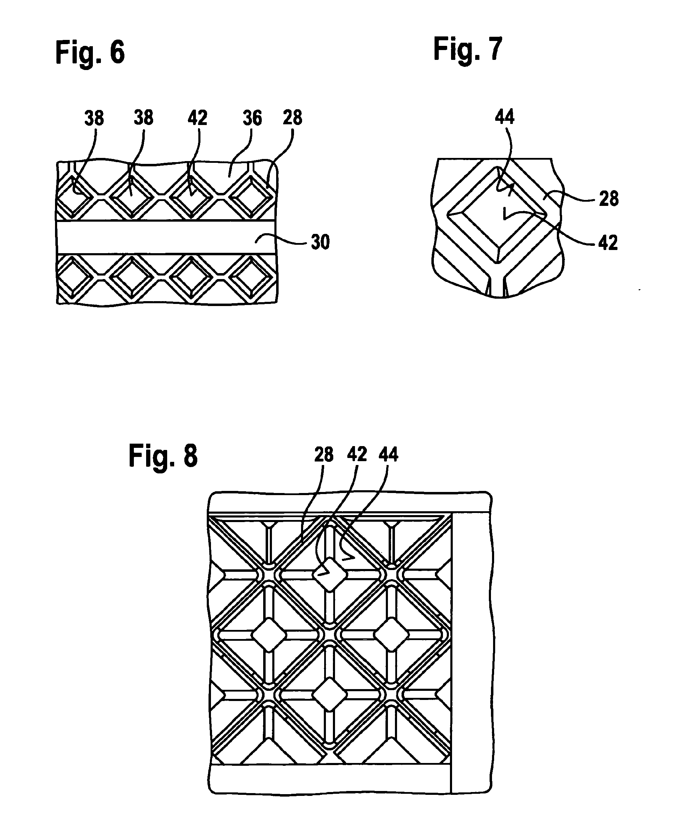

Aus der EP-A-242480 ist bereits ein rautenförmiges Siegelprofil durch Ultraschallsiegelung von Verpackungen bekannt. Hierbei wird insbesondere die Kopfnaht der Verpackung gesiegelt, indem der Amboss relativ zur Sonotrode in einer Linearbewegung geführt wird. Zudem weisen die rautenförmigen Profile, beispielsweise gemäß der Figur 7, gerade Kanten auf.

Aus der EP-A-1066951 ist eine Ultraschallsiegeleinrichtung bekannt, welche eine Quernaht einer auf einer horizontalen Schlauchbeutelmaschine hergestellten Verpackung siegelt. Hierzu werden gegenüberliegende Siegelpacken linear zueinander bewegt.

Bei der JP-A-7 010130 steht eine Linearbewegung, in Figur 1 durch die Pfeile angedeutet, der Siegelpacken zueinander im Vordergrund, jedoch keine rotierende Bewegung von Amboss und Gegenfläche.

Der Erfindung liegt die Aufgabe zugrunde, eine Siegelbacke anzugeben, die die Siegelqualität verbessert. Diese Aufgabe wird gelöst durch die Merkmale des unabhängigen Anspruchs.

### Vorteile der Erfindung

Die erfindungsgemäße Siegelbacke zur Siegelung eines Packstoffs mittels Ultraschall hat demgegenüber den Vorteil, dass aufgrund des gewählten Siegelprofils eine Verlängerung der Kontaktzeit zwischen den Siegelwerkzeugen erreicht wird, wodurch die Siegelqualität verbessert wird. Die Siegelbacke zur Siegelung eines Packstoffs mittels Ultraschall umfasst Energierichtungsgeber, die zum Siegeln über den Packstoff mit einer Gegenfläche in Kontakt gebracht werden können. Erfindungsgemäß weisen die Energierichtungsgeber ein im Wesentlichen gitter- oder rautenförmiges Siegelprofil auf.

Erfindungsgemäß ist vorgesehen, dass die Energierichtungsgeber mit einem Radius versehen sind. Hierdurch wird der Packstoff geschont. Außerdem lässt sich eine hohe Siegelnahtfestigkeit und - dichtigkeit erreichen.

Erfindungsgemäß ist vorgesehen, dass die Seitenflächen mit einem Winkel gegenüber der Oberfläche des Siegelprofils geneigt sind. Dadurch lässt sich in Verbindung mit der gerundeten Ausführung des Energierichtungsgebers der Schmelzfluss optimieren.

Erfindungsgemäß ist vorgesehen, dass die Seitenflächen abgerundet in die Grundflächen übergehen. Dies trägt zu einer packstoffschonenden Siegelung bei und wirkt einem eventuellen Anhaften von Produktresten entgegen.

In einer zweckmäßigen Weiterbildung ist vorgesehen, dass das gitter- oder rautenförmige Siegelprofil aus mehreren im Wesentlichen gleich großen Rechtecken besteht. Dadurch wird eine besonders gleichmäßige Kraftaufbringung erreicht, wodurch eine Siegelnaht mit gleichbleibend hoher Festigkeit erreicht wird.

In einer zweckmäßigen Weiterbildung ist vorgesehen, dass die Rechtecke so hinsichtlich einer Seitenkante der Siegelbacke angeordnet sind, dass sich ein zickzack-förmiger Verlauf des Energierichtungsgebers ergibt. Dadurch lässt sich insbesondere eine Vergrößerung der Kontaktfläche erzielen, wodurch die Energieeintragung zur Siegelung verbessert wird.

In einer zweckmäßigen Weiterbildung ist vorgesehen, dass die Rechtecke so angeordnet sind, dass eine Grundfläche der Rechtecke mit einem von Null verschiedenen Winkel, vorzugsweise 45°, gegenüber der Seitenkante der Siegelbacke angeordnet ist. Dadurch ergibt sich ein im Wesentlichen paralleler Verlauf der zickzack-förmigen Energierichtungsgeber parallel zu Seitenkante, so dass sich eine dichte Siegelung ergibt.

In einer zweckmäßigen Weiterbildung ist vorgesehen, dass die Diagonalenlänge der Rechtecke so gewählt ist, dass die doppelte Diagonalenlänge der Rechtecke kleiner oder gleich einer Breite des Siegelprofils ist. Dadurch wird eine hohe Dichtigkeit erreicht, da immer zwei Rechtecke die Quernahtsiegelung erzielen.

In einer zweckmäßigen Weiterbildung ist vorgesehen, dass das Siegelprofil zwei Teilbereiche aufweist, die voneinander durch einen Spalt getrennt sind. In diesem Spalt lässt sich ein Schneidmesser integrieren, während die beiden anderen Teilbereiche der Quernahtsieglung zweier voneinander zu trennender Beutelverpackungen dienen.

Weitere zweckmäßige Weiterbildungen ergeben sich aus weiteren abhängigen Ansprüchen und aus der Beschreibung.

### Zeichnung

Ausführungsbeispiele der Vorrichtung zum Bearbeiten eines Packstoffs mittels Ultraschall sind in der Zeichnung dargestellt und werden nachfolgend näher beschrieben.

Es zeigen:
Figur 1 eine perspektivische Vorderansicht der Vorrichtung zum Bearbeiten eines Packstoffs,
die Figur 2 die Draufsicht auf ein Siegelprofil des Amboss,
die Figur 3 ein Schnittdarstellung des Siegelprofils gemäß Figur 2,
die Figur 4 eine Detailansicht des Siegelprofils gemäß Figur 2,
die Figur 5 eine Schnittdarstellung eines Energierichtungsgebers gemäß Figur 2 in Detailansicht,
die Figur 6 perspektivische Darstellung eines ersten Siegelprofils,
die Figur 7 vergrößerte Detailansicht der Darstellung nach Figur 6 sowie
die Figur 8 Draufsicht eines zweiten Siegelprofils mit flacheren Seitenwänden.

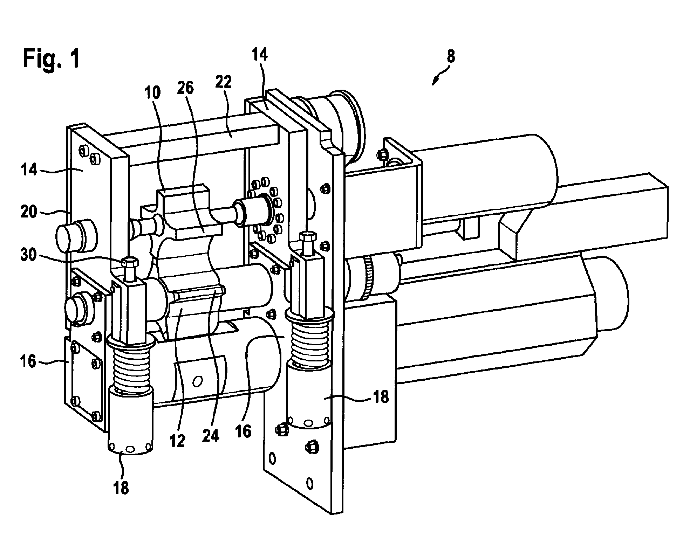

Bei der Vorrichtung gemäß Figur 1 wird eine Sonotrode 10 auf beiden Seiten von jeweils einem Lagerschild 14 drehbar gelagert geführt. Die beiden Lagerschilde 14 für die Sonotrode 10 sind an der Oberseite der Vorrichtung 8 durch ein oberes Trägermittel 22, hier beispielhaft als Trägerstab ausgeführt, seitlich miteinander verbunden. Mit der Sonotrode 10 wirkt ein ebenfalls rotierend gelagerter Amboss 12 zusammen. Der Amboss 12 ist in zwei Lagerschilden 16 gelagert. Das Lagerschild 14 der Sonotrode 10 ist mit dem jeweils darunter angeordneten Lagerschild 16 des Amboss 12 durch ein Kopplungsmittel 20 verbunden. Die beiden Lagerschilde 16 des Amboss 12 wiederum sind mit einem unteren Trägermittel 24 seitlich miteinander verbunden, welches beispielhaft als Trägerrohr ausgebildet ist. Auf der bezogen auf die Rotationsachsen von Sonotrode 10 bzw. Amboss 12 gegenüberliegenden Seite des Kopplungsmittels 20 sind jeweils Kraftmittel 18 angeordnet, über die die notwendige Siegelkraft auf die Siegelfläche von Sonotrode 10 und Amboss 12 aufgebracht werden kann. Oberhalb der Kraftmittel 18 sind jeweils Einstellmittel 30 vorgesehen. Dadurch lassen sich Siegelkraft bzw. Siegelspalt justieren.

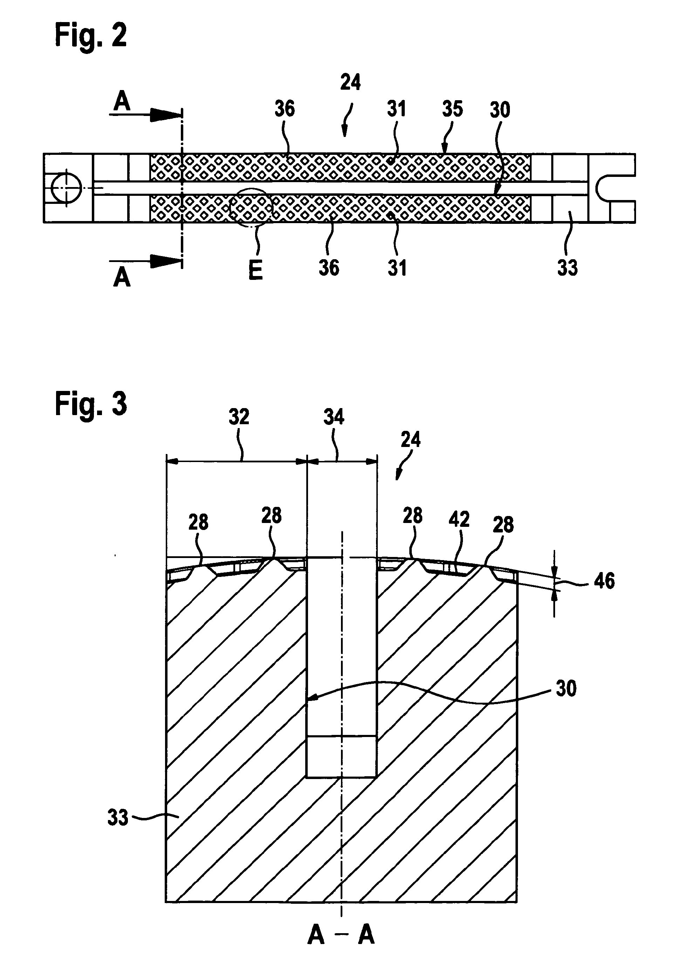

Sonotrode 10 und Amboss 12 weisen jeweils vier Siegelflächen 24, 26 auf. Die Siegelfläche 26 der Sonotrode 10 besitzt eine glatte, flächige Oberfläche auf. Die Siegelfläche 24 des Amboss 10 wird anhand der nachfolgenden Figuren näher beschrieben. Gemäß Figur 2 besteht die rechteckförmige Siegelfläche 24 des Amboss 10 aus zwei rechteckförmigen Teilflächen 31, die von einem länglichen Spalt 30 voneinander getrennt sind. Die beiden Teilflächen 31 sind jeweils mit speziellen Siegelprofilen 36 versehen. Die Siegelprofile 36 sind im Wesentlichen rechteckförmig bzw. rautenförmig ausgebildet. Die Grundseite der einzelnen, das rechteckförmige Siegelprofil 36 bildenden Rechtecke 38 sind um ca. 45° gegenüber der Seitenkante 35 geneigt ausgerichtet, wodurch eine Verlängerung der Siegellänge erreicht wird.

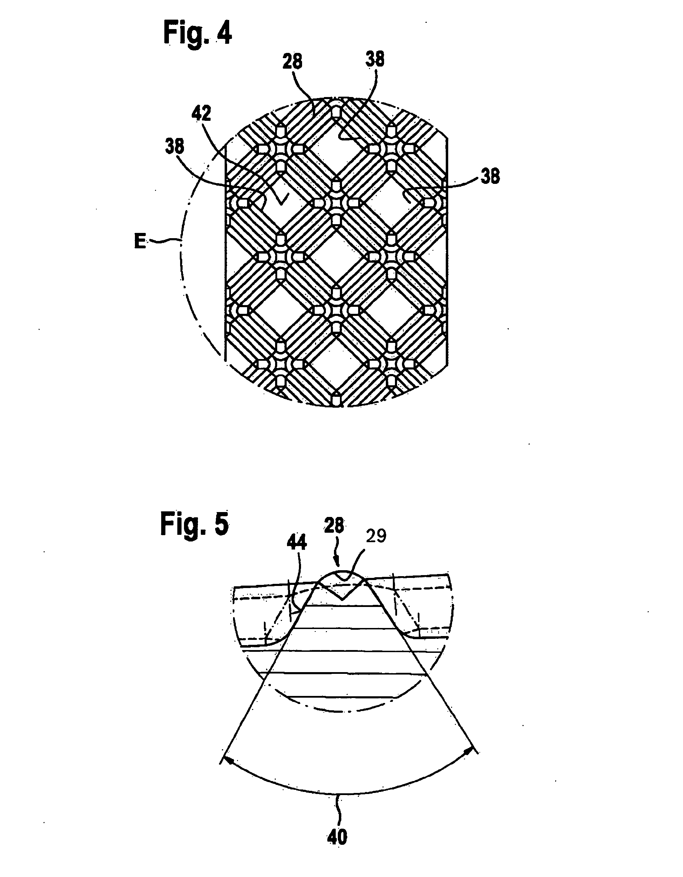

Bei der Schnittdarstellung gemäß Figur 3 wird ersichtlich, dass Energierichtungsgeber 28 in einer bestimmten Höhe 46 gegenüber den Grundflächen 42 überstehen. Die Energierichtungsgeber 28 sind Teil einer Siegelbacke 33. Diese Energierichtungsgeber 28 wirken während des Siegelprozesses als Gegenflächen für die Siegelfläche 26 der Sonotrode 10. Gemäß Figur 5 wird ersichtlich, dass die in Richtung zur Sonotrode 10 ragende Spitze des Energierichtungsgebers 28 mit einem Radius 29 ausgeführt ist. Außerdem ist der Energierichtungsgeber 28 um einen Winkel 40 hin zur Grundfläche 42 geneigt. Die um den Winkel 40 geneigten Seitenflächen 44 des Energierichtungsgebers 28 gehen mit einem nicht näher bestimmten Radius über in die Grundflächen 42. Gemäß Figur 4 ist die beschriebene Geometrie in einer vergrößerten Darstellung abgebildet. Die Teilfläche 31 des Siegelprofils 36 weist eine Siegelbreite 32, der Spalt 30 eine Spaltbreite 32 auf.

Zur weiteren Verdeutlichung der Zeichnung gemäß den Figuren 2 bis 5 sind perspektivische Darstellungen in den Figuren 6 und 7 gezeigt. Hierbei sind die Seitenflächen 44 relativ stark geneigt, ca. um einen Winkel 40 von ca. 60°. Bei dem Ausführungsbeispiel nach Figur 8 sind die Seitenflächen 44 dagegen um einen Winkel 40 von ca. 120° geneigt.

Die Vorrichtung 8 zum Bearbeiten eines Packstoffs mittels Ultraschall arbeitet wie folgt. Sie umfasst als wesentliches Element die Sonotrode 10, die als aktives Schweißwerkzeug gegen den Amboss 12 wirkt. Von einem elektrischen Generator wird die Netzspannung in eine hochfrequente elektrische Spannung umgewandelt. An den Generator ist ein Schallwandler (Converter) angeschlossen, der wiederum die elektrische Energie in hochfrequente mechanische Schwingungen umwandelt. Mittels eines Amplitudentransformationsstücks (Booster) werden die Amplituden verstärkt oder verringert und vom Converter auf die Sonotrode 10 übertragen. Der Amboss 12 ist das passive Werkstück. Zwischen Amboss 12 und Sonotrode 10 wird das zu verschweißende Werkstück, beispielsweise der Packstoff, eingeklemmt, um so den Energieübergang zwischen Sonotrode 10 und dem Packstoff zu ermöglichen. Der Amboss 12 absorbiert die Ultraschallschwingungen der Sonotrode 10. Sowohl Sonotrode 10 als auch Amboss 12 rotieren gegenläufig und sind quasi als Siegelwalzen ausgeführt. Sie weisen mehrere Siegelflächen auf, in denen auch eine Schneidfunktion zur Abtrennung des Packstoffes integriert sein kann. Abhängig von der Art des Packstoffes muss mit hoher Genauigkeit ein Siegelspalt eingestellt werden.

Die Vorrichtung 8 dient zur Quernahtsiegelung eines Schlauchbeutels. Mittels der ersten Teilfläche 31 erfolgt das Siegeln der Anfangs-Quernaht des nachlaufenden Beutels, mittels eines in dem Spalt 30 angeordneten Schneidmesser werden zwei Beutel voneinander getrennt, mittels der zweiten Teilfläche 31 wird die End-Quernaht des voranlaufenden Beutels gesiegelt.

Beim Ultraschallsiegeln kann nur während der Kontaktzeit zwischen Sonotrode 10, zu siegelnder Folie und Energierichtungsgeber 28 des Amboss 12 Energie eingetragen werden. Deshalb ist es sinnvoll, den Energieeintrag insbesondere bei dem beschriebenen rotierenden Siegelverfahren zu optimieren. Dies erfolgt durch das beschriebene Siegelprofil 36. Die beschriebene gitterartige Struktur der Energierichtungsgeber 28 vergrößert die Kontaktfläche, indem sie zickzackförmig entlang der Seitenkante 35 des Siegleprofils 36 verläuft und damit länger ausgebildet ist als eine parallele, geradlinige Ausführung entlang der Seitenkante 35 wie beim Stand der Technik. Durch die gezeigte gitterförmige, waffelartige Struktur wird außerdem eine gleichmäßige Verteilung der Siegelkraft erreicht. Um eine dichte Siegelung zu erreichen, sind entlang der Siegelbreite 32 einer Teilfläche 31 immer zwei Rechtecke 38 angeordnet.

Die abgerundete Oberfläche mit dem Radius 29 des Energierichtungsgebers 28 im Zusammenwirken mit den um den Winkel 40 geneigten Seitenflächen 44 hat sich als besonders vorteilhaft für die Steuerung des Schmelzflusses herausgestellt.

Die Breite 32 liegt bevorzugt in der Größenordnung von 6mm. Die Spaltbreite 34 des Spalts 30 liegt bevorzugt in der Größenordnung von 3mm. Damit liegt die Gesamtbreite der Siegelbacke 33 in der Größenordnung von 15mm. Die Spitze des Energierichtungsgebers 28 ragt über die Grundfläche 42 der Rechtecke 38 mit der Höhe 46 heraus und liegt in etwa in der Größenordnung von 0,5mm. Der Radius 29 liegt in etwa im Bereich zwischen 0,1 bis 1mm. Der Winkel 40 liegt bevorzugt in einem Bereich zwischen 20° und 120°. Die Siegelbacke 33 besteht vorzugsweise aus Stahl. Die Siegelbacke 33 weist entsprechende Aufnahmen für Befestigungsmittel wie Bolzen oder Schrauben auf, mit denen die Siegelbacke 33 mit dem Amboss befestigt werden kann.

## Patentansprüche

1. Siegelbacke für einen rotierenden Amboss (12) zur Siegelung eines Packstoffs mittels Ultraschall, umfassend Energierichtungsgeber (28), die zum Siegeln über den Packstoff mit einer rotierenden Gegenfläche (26) in Kontakt gebracht werden können, **dadurch gekennzeichnet, dass** die Energierichtungsgeber (28) ein im Wesentlichen gitter- oder rautenförmiges Siegelprofil (36) aufweisen, wobei die Energierichtungsgeber (28) mit einem Radius (29) versehen sind, gegenüber zumindest einer parallel zur Oberfläche des Siegelprofils (36) orientierten Grundfläche (42) überstehen und mit Seitenflächen (44) verbunden sind und die Seitenflächen (44) mit einem Winkel (40) gegenüber der Oberfläche des Siegelprofils (36) geneigt sind, wobei die Seitenflächen (44) abgerundet in die Grundflächen (42) übergehen.

2. Siegelbacke nach Anspruch 1, **dadurch gekennzeichnet, dass** das gitter- oder rautenförmige Siegelprofil (36) aus mehreren im Wesentlichen gleich großen Rechtecken (38) besteht.

3. Siegelbacke nach Anspruch 2, **dadurch gekennzeichnet, dass** die Rechtecke (38) so hinsichtlich einer Seitenkante (35) der Siegelbacke (33) angeordnet sind, dass sich ein zickzack-förmiger Verlauf des Energierichtungsgebers (28) ergibt.

4. Siegelbacke nach einem der vorhergehenden Ansprüche 2 oder 3, **dadurch gekennzeichnet, dass** die Rechtecke (38) so angeordnet sind, dass eine Grundfläche der Rechtecke (38) mit einem von Null verschiedenen Winkel, vorzugsweise 45°, gegenüber der Seitenkante (35) der Siegelbacke (33) angeordnet ist.

5. Siegelbacke nach einem der vorhergehenden Ansprüche 2 bis 4, **dadurch gekennzeichnet, dass** die Diagonalenlänge der Rechtecke (38) so gewählt ist, dass die doppelte Diagonalenlänge der Rechtecke (38) kleiner oder gleich einer Breite (32) des Siegelprofils (36) ist.

6. Siegelbacke nach einem der vorhergehenden Ansprüche, **dadurch gekennzeichnet, dass** das Siegelprofil (36) zwei Teilbereiche (31) aufweist, die voneinander durch einen Spalt (30) getrennt sind.

## Claims

1. Sealing jaw for a rotating anvil (12) for sealing a packaging material using ultrasound, said sealing jaw including energy directing means (28) which can be moved into contact with a rotating counter surface (26) for sealing the packaging material, **characterized in that** the energy directing means (28) have a substantially grid-shaped or rhomboidal sealing profile (36), wherein the energy directing means (28) are provided with a radius (29), protrude in relation to at least one base face (42) oriented parallel to the surface of the sealing profile (36) and are connected to side faces (44), and the side faces (44) are inclined at an angle (40) in relation to the surface of the sealing profile (36) wherein the side faces (44) merge rounded-off into the base faces (42).

2. Sealing jaw according to Claim 1, **characterized in that** the grid-shaped or rhomboidal sealing profile (36) consists of several rectangles (38) of substantially identical size.

3. Sealing jaw according to Claim 2, **characterized in that** the rectangles (38) are arranged in such a manner with regard to a side edge (35) of the sealing jaw (33) that a zigzag-shaped development of the energy directing means (28) is produced.

4. Sealing jaw according to either of the preceding Claims 2 and 3, **characterized in that** the rectangles (38) are arranged such that a base face of the rectangles (38) is arranged at an angle that differs from zero, preferably 45°, in relation to the side edge (35) of the sealing jaw (33).

5. Sealing jaw according to one of the preceding Claims 2 to 4, **characterized in that** the length of the diagonals of the rectangles (38) is selected such that twice the length of the diagonals of the rectangles (38) is less than or equal to a width (32) of the sealing profile (36).

6. Sealing jaw according to one of the preceding claims, **characterized in that** the sealing profile (36) has two part regions (31) which are separated from each other by a gap (30).

## Revendications

1. Mâchoire de sceau pour enclume rotative (12) utilisée pour sceller un emballage par ultrasons, la mâchoire comprenant des émetteurs directionnels (28) d'énergie qui peuvent être amenés au-dessus de l'emballage en contact avec une surface complémentaire rotative (26) pour le sceller,
**caractérisée en ce que**
les émetteurs directionnels (28) d'énergie présentent un profil de scellement (36) essentiellement en forme de grille ou de losange,
**en ce que** les émetteurs directionnels (28) d'énergie sont dotés d'un rayon (29), débordent par rapport à au moins une surface de base (42) orientée parallèlement à la surface du profil de scellement (36) et sont reliés à des surfaces latérales (44),
**en ce que** les surfaces latérales (44) sont inclinées d'un angle (40) par rapport à la surface du profil de scellement (36) et
**en ce que** les surfaces latérales (44) se prolongent en arrondi en les surfaces de base (42).

2. Mâchoire de sceau selon la revendication 1, **caractérisée en ce que** le profil de scellement (36) en forme de grille ou de losange est constitué de plusieurs rectangles (38) essentiellement de même taille.

3. Mâchoire de sceau selon la revendication 2, **caractérisée en ce que** les rectangles (38) sont disposés par rapport à une arête latérale (35) de la mâchoire de sceau (33) de telle sorte que l'émetteur directionnel (28) d'énergie se développe en zigzag.

4. Mâchoire de sceau selon la revendication selon l'une des revendications 2 ou 3 qui précèdent, **caractérisée en ce que** les rectangles (38) sont disposés de telle sorte qu'une surface de base des rectangles (38) soit disposée par rapport à l'arête latérale (35) de la mâchoire de sceau (33) sous un angle différent de zéro, et de préférence de 45°.

5. Mâchoire de sceau selon la revendication selon l'une des revendications 2 à 4 qui précèdent, **caractérisée en ce que** la longueur de la diagonale des rectangles (38) est sélectionnée de telle sorte que le double de la longueur de la diagonale des rectangles (38) soit inférieur ou égal à la largeur (32) du profil (36) du sceau.

6. Mâchoire de sceau selon la revendication selon l'une des revendications qui précèdent, **caractérisée en ce que** le profil (36) du sceau présente deux parties (31) séparées l'une de l'autre par un interstice (30).
